# EUROPEAN PATENT SPECIFICATION

(11) **EP 4 107 531 B1**
(45) Date of publication and mention of the grant of the patent: **12.06.2024**
(21) Application number: 21705637.3
(22) Date of filing: 11.02.2021
(51) Int. Cl.: G01N 1/10

(54) **SAMPLING ARRANGEMENT**
PROBENAHMEANORDNUNG
AGENCEMENT D'ÉCHANTILLONNAGE

(30) Priority: 14.02.2020 NL 2024908
(43) Date of publication of application: 28.12.2022
(73) Proprietor: Cyberhydra Holding B.V., 2595 TL 's-Gravenhage (NL)
(72) Inventor: VAN PUTTEN, Robbert, 2600 AA Delft (NL); USLAMIN, Evgeny, 2600 AA Delft (NL); PIDKO, Evgeny Alexandrovich, 2600 AA Delft (NL)
(74) Representative: EDP Patent Attorneys B.V.
(86) International application number: PCT/NL2021/050091
(87) International publication number: WO 2021/162552

(56) References cited:
- EP-A1- 3 043 178
- EP-A2- 2 711 076
- US-A1- 2013 240 449

## Description

### FIELD OF THE INVENTION

The invention relates to a sampling arrangement. The method further relates to a system comprising the sampling arrangement. The method further relates to a method for sampling.

### BACKGROUND OF THE INVENTION

Systems for sampling are known in the art. For example, US2011318243A1 describes an in situ sampling device for capturing a material sample from a vessel. It describes devices with elongate probes having extendable sample capture elements. A sample capture element of such a device may include a concave sample capture pocket located near a distal end thereof. The sample capture pocket is adapted to capture a volume of material when the sample capture element is extended into said material. The material sample remains trapped in the sample capture pocket upon sample capture element retraction. The sample capture pocket may be provided with a port for receiving material therein and a port for expelling material therefrom. These ports may be placed in communication with corresponding material transfer channels extending through the sample capture element.

EP2711076A2 describes a fluid processing assembly, according to the preamble of claim 1, comprises a lumen for receiving at least one inlet stream and dispensing a primary product stream, and an energizing device for supplying energy to an energizable portion of the lumen. A primary product collection assembly is in fluid communication with the lumen for receiving the primary product stream. The energizable portion is positioned exterior to the primary product collection assembly. A pressurized gas source is downstream of the lumen. The pressurized gas source supplies pressurized gas to the primary product collection assembly for pressurizing at least a portion of the primary product collection assembly and the lumen.

EP3043178A1 describes automated sampling and reaction systems and methods of using the same. The automated sampling and reaction system has a microreactor in fluidic communication with an external sampling valve. The external sampling valve is connected to a priming valve and can be configured to draw sample from a reactor or a reactor stream. The microreactor is connected to a reagent valve and an injection valve. The reagent valve can be configured to draw reagent from a reagent reservoir and discharge reagent to the microreactor to react with sample. The priming valve can be configured to draw wash from a wash reservoir and discharge wash to the external sampling valve to move sample from the external sampling valve to the microreactor. The injection valve is in fluidic communication with a column or detector and discharges the secondary sample into a solvent composition stream.

US2013240449A1 describes systems and methods for purification of radiotracers and non-radioactive materials produced by both microfluidic, conventional, semi-automated and manual synthesis systems.

### SUMMARY OF THE INVENTION

The development of new chemistry as well as the scale-up of established chemistry may benefit from detailed insight in the ongoing processes in a reactor, especially on a molecular level, for kinetic analysis. Kinetic analysis may require successively collecting a plurality of samples within a short timeframe. Therefore, there may be a need for automated and accurate sampling at predetermined time-intervals.

The prior art may describe sampling systems. However, these systems may suffer from various drawbacks. In particular, the prior art systems may, among others: (i) perturb conditions in a reactor, especially via the introduction of one or more (gaseous) compounds, which may be particularly detrimental for reactors with a low volume, (ii) be unsuitable for oxygen-sensitive processes, (iii) be unsuitable for sampling from hazardous conditions, such as especially high-pressure processes, high-temperature processes, or processes involving dangerous chemicals, (iv) be inflexible with regards to sampling volume, (v) have an insufficient sampling rate and may therefore be unsuitable to probe fast processes, (vi) may be prohibitively expensive, especially with regards to consumables, (vii) may be inaccurate with respect to sampling volumes of sample and/or solvent, and (viii) may provide the samples in a container/condition unsuitable for direct further analysis.

Hence, it is an aspect of the invention to provide an alternative sampling arrangement, which preferably further at least partly obviates one or more of above-described drawbacks. The present invention may have as object to overcome or ameliorate at least one of the disadvantages of the prior art, or to provide a useful alternative.

Hence, in a first aspect, the invention provides a sampling arrangement for sampling from a reactor. The sampling arrangement may comprise a solvent compartment, one or more multiple-position valves (also: "multi-position valves"), and a sampling compartment. In embodiments, the one or more multiple-position valves may be configured to provide in a first operational mode (also: "first operation mode"): (i) fluid contact between a solvent inlet and the solvent compartment; (ii) fluid contact between the reactor and the sampling compartment; and/or (iii) fluid separation between the solvent compartment and the sampling compartment. In further embodiments, the one or more multiple-position valves may be configured to provide in a second operational mode (also: "second operation mode"): fluid contact between (successively) a gas inlet, the solvent compartment, the sampling compartment, and an outlet.

During the first operational mode, the sampling compartment may be filled with a sample from the reactor, especially due to a higher pressure in the reactor relative to the sampling compartment. Similarly, during the first operational mode, the solvent compartment may be filled with a solvent portion from the solvent inlet. During the second operational mode, an inlet gas (also: "gas") from the gas inlet may push the contents of the solvent compartment and the sampling compartment to the outlet, especially thereby providing the sample for further analysis. Hence, during the second operational mode, a gas may be provided from the gas inlet to successively the solvent compartment, the sampling compartment and the outlet, *i.e.,* the gas may be provided from the gas inlet to the outlet via the solvent compartment and the sampling compartment, wherein the solvent compartment is arranged upstream of the sampling compartment, and wherein the sampling compartment is arranged upstream of the outlet. In particular, the (successive) arrangement of solvent compartment and sampling compartment provides that the solvent portion may essentially wash the sampling compartment as it travels through, thereby reducing, especially preventing, the presence of any residual sample in the sampling compartment, which may be beneficial both by facilitating providing the entire sample to the outlet, and by removing the need for a washing step to remove residual sample from the sampling compartment prior to sampling again. Hence, due to the (successive) arrangement, the second operational mode may be directly followed by the first operational mode without the need of an intermediate washing step, thereby simplifying, improving and/or accelerating the sampling procedure.

The sampling arrangement may enable accurate sampling of fast reactions, as well as of reaction mixtures that continue to react at room temperature and/or atmospheric pressure (see below). In particular, the sampling arrangement may facilitate sampling with sampling frequencies ≥ 6/min, such as ≥ 5/min, especially ≥ 2/min. In further embodiments, the sampling arrangement may have a fastest sampling rate ≤ 2/min, such as ≤ 3/min, especially ≤ 4/min, such as ≤ 5/min.

Thereby, the invention may provide a sampling arrangement that may be simple in use, while facilitating obtaining well-defined samples in quick succession. In particular, the sampling arrangement may be suitable for sampling from hazardous conditions, and may be essentially non-invasive with respect to the reactor conditions.

Hence, the invention may provide a sampling arrangement for sampling from a reactor. The term "sampling arrangement" may herein refer to an element, especially a plurality of elements, configured to facilitate sampling from a container, especially a reactor, such as a (pressurized) vessel, especially an autoclave. In particular, the sampling arrangement may be functionally coupled to the reactor (for sampling). Further, the sampling arrangement may be functionally coupled to a gas inlet. Yet further, the sampling arrangement may be functionally coupled to a solvent inlet. Yet further, the sampling arrangement may be functionally coupled to an outlet, especially a dispenser.

The term "reactor" may herein especially refer to a reactor wherein a (bio)chemical transformation/reaction of interest takes place, such as an autoclave, a pressurized vessel, or a bioreactor.

In embodiments, the reactor may comprise a pressurized stream. A pressurized stream may herein refer to (a reactor that is operated in) continuous flow. For example, several sampling arrangements may be arranged along a reactor axis to sample as a function of the reactor axis.

In embodiments, the sampling arrangement may comprise a solvent compartment. The solvent compartment may especially be configured to host a solvent portion, especially a solvent portion of a predefined volume. The solvent portion may comprise a solvent. Essentially, any solvent suitable for the sample (and any intended post-processing) may be used, including, for example, relatively-challenging-in-use solvents such as acetone and THF. The person skilled in the art will be capable of selecting a suitable solvent for the specific application intended. The solvent compartment may especially be filled during the first operational mode, and may especially be emptied during the second operational mode.

In further embodiments, the sampling arrangement may comprise a sampling compartment. The sampling compartment may especially be configured to host a sample, especially a sample of a predefined volume. The sampling compartment may especially be filled during the first operational mode, and may especially be emptied during the second operational mode.

The term "compartment" may herein refer to a space for hosting a fluid. A compartment may, for example, comprise a microfluidic chamber and/or a loop.

Hence, in embodiments, the solvent compartment may comprise a microfluidic solvent chamber. In further embodiments, the solvent compartment may comprise a solvent loop.

Similarly, in embodiments, the sampling compartment may comprise a microfluidic sampling chamber. In further embodiments, the sampling compartment may comprise a sampling loop.

In embodiments, the sampling arrangement may comprise one or more multiple-position (multi-way) valves. The term "multi-position valve" may herein especially refer to a valve having a plurality of positions (or "connectors"), wherein the valve is configurable in at least a first configuration and a second configuration, wherein the valve provides fluid contact between the positions based on whether the valve is configured in the first configuration or in the second configuration. For example, a four-position two-way valve may in a first configuration (or: "first way") provide a fluid contact between positions 1-2, and between positions 3-4, while providing fluid separation between positions 1-3, 1-4, 2-3, and 2-4, whereas in the second configuration (or: "second way") the four-position two-way valve may provide a fluid contact between positions 1-4, and 2-3, while providing fluid separation between positions 1-2, 1-3, 4-2, and 4-3.

In embodiments, the sampling arrangement may be operable in a first operational mode and in a second operational mode.

In further embodiments, in the first operational mode the one or more multiple-position valves may be configured to provide fluid contact between a solvent inlet and the solvent compartment. In further embodiments, in the first operational mode the one or more multiple-position valves may be configured to provide fluid contact between the reactor and the sampling compartment. In further embodiments, in the first operational mode the one or more multiple-position valves may be configured to provide fluid separation between the solvent compartment and the sampling compartment.

In further embodiments, in the second operational mode the one or more multiple-position valves may be configured to provide fluid contact between (successively) a gas inlet, the solvent compartment, the sampling compartment, and an outlet. In particular, the gas inlet may be configured to provide an inlet gas to the outlet via the solvent compartment and the sampling compartment, wherein the solvent compartment is arranged upstream of the sampling compartment. Hence, in the second operational mode, the one or more multiple-position valves may be configured to provide a fluid contact between the gas inlet and the outlet via the solvent compartment and the sampling compartment, wherein the solvent compartment is arranged upstream of the sampling compartment (relative to the gas inlet), *i.e.,* the gas inlet is closer to the solvent compartment than to the sampling compartment.

During the second operational mode, the sampling compartment may be under constant positive pressure from the inlet gas, which may thereby prevent contamination with other gases, e.g., oxygen, from the outlet, which could otherwise potentially enter the reactor.

In further embodiments, in the second operational mode, the one or more multiple-position valves may be configured to provide fluid separation between the solvent inlet and the solvent compartment. In further embodiments, in the second operational mode, the one or more multiple-position valves may be configured to provide fluid separation between the reactor and the sampling compartment.

Hence, in specific embodiments, the sampling arrangement may comprise a solvent compartment, one or more multiple-position valves, and a sampling compartment, wherein in a first operational mode the one or more multiple-position valves are configured to provide: (i) fluid contact between a solvent inlet and the solvent compartment; (ii) fluid contact between the reactor and the sampling compartment; and (iii) fluid separation between the solvent compartment and the sampling compartment; and wherein in a second operational mode the one or more multiple-position valves are configured to provide fluid contact between (successively) a gas inlet, the solvent compartment, the sampling compartment, and an outlet.

In specific embodiments, the sampling arrangement may comprise a solvent compartment and a sampling compartment, wherein in a first operational mode, the sampling compartment is in fluid contact with the reactor such that the sampling compartment is filled with a sample (from the reactor), and wherein the solvent compartment is in fluid contact with a solvent inlet such that the solvent compartment is filled with a solvent portion (from the solvent inlet); and wherein in a second operational mode, a gas inlet may be in fluid contact with the solvent compartment, the sampling compartment and an outlet, wherein the gas inlet is configured to provide an inlet gas at a pressure above an atmospheric pressure; and wherein the solvent compartment and the sampling compartment are configured such that: (i) in the first operational mode the solvent compartment and the sampling compartment are in fluid separation; and (ii) in the second operational mode the solvent compartment is arranged upstream from the sampling compartment, and the sampling compartment is arranged upstream from the outlet.

In embodiments, the one or more multiple-position valves may comprise a 10-position valve, especially a 10-position two-way valve, wherein the 10-position valve is (at least) configurable in a first configuration (or "first way") and in a second configuration (or: "second way"). In further embodiments, the sampling arrangement may be in the first operational mode when the 10-position valve is in the first configuration, and the sampling arrangement may be in the second operational mode when the 10-position valve is in the second configuration.

It will be clear to the person skilled in the art that the beneficial arrangement described herein with respect to a 10-position valve may also be attained using a valve with more positions, especially by leaving one or more positions (essentially) unused. Hence, the term "10-position valve" may herein refer to a multi-position valve that has at least 10 positions, such as a 12-way valve. In further embodiments, the 10-position valve may have exactly 10 positions.

In principle, the same configurations attainable with a 10-position valve may be attained with two six-position valves operated in sync. The use of a plurality of valves may, however, inherently provide for more complex operations and the possibility that the valves are operated out of sync, which may provide undesirable fluid contacts. Therefore, the 10-position valve may be particularly beneficial as it may facilitate independently switching between the first operational mode and the second operational mode (of the sampling arrangement) without the need for any additional valves. Thereby, the 10-position valve may contribute both to preventing undesired fluid contacts, and to simplifying the (operation of) the sampling arrangement.

The sampling compartment and the solvent compartment may generally be configured to host predefined volumes of fluid. In particular, the solvent compartment may be configured to host a larger volume (of solvent portion) than the sampling compartment (of sample), which may be beneficial with regards to the washing of the sampling compartment by the solvent portion.

Hence, in embodiments, the sampling compartment may have a sampling volume V₁₅₀. In further embodiments, the sampling volume V₁₅₀≥ 10 µl, such as ≥ 30 µl, especially ≥ 50 µl, such as ≥ 100 µl. In further embodiments, the sampling volume V₁₅₀ ≤ 10 ml, such as ≤ 5 ml, especially ≤ 3 ml, such as ≤ 1 ml. In further embodiments, the sampling volume V₁₅₀ may be selected from the range of 50 µl - 5 ml.

In further embodiments, the solvent compartment may have a solvent volume V₁₃₀, especially wherein V₁₃₀≥ V₁₅₀, such as V₁₃₀ ≥ 2*V₁₅₀, especially V₁₃₀ ≥ 3*V₁₅₀, such as V₁₃₀ ≥ 5*V₁₅₀, especially V₁₃₀ ≥ 10*V₁₅₀, such as V₁₃₀ ≥ 20*V₁₅₀.

In particular, a ratio between the solvent volume V₁₃₀ and the sampling volume V₁₅₀ may be selected such that the sampling compartment is sufficiently washed by the solvent portion. Hence, in further embodiments, a ratio between the solvent volume V₁₃₀ and the sampling volume V₁₃₀ V₁₃₀/V₁₅₀ may be selected from the range of 2 - 20, especially from the range of 5 - 10.

In embodiments, the solvent compartment may be detachably attached to the one or more multiple-position valves. Thereby, the solvent compartment may be easily replaced by a solvent compartment of a different volume, allowing for increased flexibility in sampling.

In further embodiments, the sampling compartment may be detachably attached to the one or more multiple-position valves. Thereby, the sampling compartment may be easily replaced by a sampling compartment of a different volume, allowing for increased flexibility in sampling.

In embodiments the sampling arrangement may comprise or be functionally coupled to a dip-tube installation, wherein the dip-tube installation is configured for insertion into the reactor. The dip-tube installation may be beneficial for sampling from a pressurized reactor.

In embodiments wherein the sampling arrangement comprises or is functionally coupled to a pump, the sampling arrangement may comprise or be functionally coupled to a return capillary, wherein the return capillary is configured for insertion into the reactor. The return capillary may be particularly useful when the sampling system is daisy chained in a series of analytical devices. For example, in embodiments, a spectrometer may be functionally coupled to the sampling arrangement, especially to the sample flow path, such that both the sample can be measured, as well as such that spectroscopical changes on the corresponding mixture (as it was going through or is going through the loop only seconds earlier/later) can be observed. In further embodiments, the spectrometer may be selected from the group comprising a UV-VIS spectrometer, an IR spectrometer, a XAS spectrometer, and an NMR spectrometer.

In further embodiments, the sampling compartment may during operation be arranged external to the reactor, *i.e.,* the sampling arrangement may be configured such that during operation the sampling compartment is arranged external to the reactor. The external arrangement of the sampling compartment may be beneficial as the presence of a mass in the reactor may affect, especially perturb, conditions in the reactor, particularly with regards to homogenization, such as in the context of aeration, and surface effects.

In a second aspect, the invention may provide a system comprising the sampling arrangement according to the invention. In embodiments, the system may comprise a control system. In further embodiments, the control system may be configured to control the one or more multiple-position valves. In further embodiments, the control system may be configured to in a first mode of operation consecutively execute the first operational mode and the second operational mode.

Hence, the control system may facilitate (automated) sampling with the sampling arrangement. For example, in further embodiments, the control system may be configured to follow a predefined sampling (time) schedule. In further embodiments, the control system may be configured to execute the first operational mode (or the second operational mode) based on a signal, such as a sensor signal, especially a sensor signal related to a reactor status, more especially a sensor signal related to one or more previously taken samples.

For example, the control system may be configured to select a sampling interval based on the signal, especially based on a (first) sensor signal related to one or more previously taken samples and based on a second (sensor) signal related to a (mixture) volume in the reactor. Specifically, the control system may be configured to balance a need to sample at a specific timepoint versus the remaining (mixture) volume in the reactor. Sample too rarely, and the data may not adequately describe the process. Sample too often, and resources may be wasted and product may be lost. Hence, in embodiment, the control system may be configured to sample based on an (input) sensor signal, wherein the (input) sensor signal is related to one or more of a gas uptake (rate) (in the reactor), a calorimetry measurement (with respect to reaction energetics), and/or an spectroscopy measurement, especially an *in situ* spectroscopy measurement, more especially an operando spectroscopy measurement.

In embodiments, the control system may be configured to control the one or more multiple-position valves, *i.e.,* the control system may be configured to change the position of one or more of the one or more multiple-position valves, especially of all of the one or more multiple-position valves. Thereby, the control system may be configured to (have the system, especially the sampling arrangement) execute the first operational mode, and to (have the system, especially the sampling arrangement) execute the second operational mode, *i.e.,* the control system may be configured to (have the system, especially the sampling arrangement) switch between the first operational mode and the second operational mode.

In further embodiments, the control system may be configured to - in a first mode of operation - consecutively execute the first operational mode and the second operational mode, *i.e.,* the control system may be configured to execute the first operational mode a plurality of times interspersed with executing the second operational mode. In further embodiments, the control system may be configured to further execute a third operational mode, wherein the third operational mode may be temporally arranged prior to, in between or after the consecutive execution of the first operational mode and the second operational mode.

In further embodiments, the control system may be configured to in a first mode of operation consecutively and successively execute the first operational mode and the second operational mode.

In embodiments, the system may comprise or be functionally coupled to a gas supply. Especially, the gas supply may be functionally coupled to the gas inlet. Hence, during the second operational mode, the outlet may be in fluid contact with the gas supply via the solvent gas inlet, the solvent compartment and the sampling compartment, especially such that the gas supply provides an inlet gas to drive the solvent portion from the solvent compartment and the sample from the sampling compartment to the outlet.

The gas supply may, in further embodiments, be configured to provide an inert gas, especially an inert gas selected from the group comprising N₂ and Ar.

The gas supply may be configured to, during the second operational mode, provide an inlet gas to drive the solvent portion and the sample to the outlet. Therefore, the gas supply may be configured to provide an inlet gas at a pressure suitable to drive the solvent portion and the sample. Hence, in further embodiments, the gas supply may be configured to provide an inlet gas (to the gas inlet) at a pressure exceeding ambient pressure, especially a pressure exceeding atmospheric pressure, more especially a pressure of at least 1.1 atm, such as at least 2 bar, especially at least 3 bar, such as at least 5 bar, especially at least 10 bar. In particular, by providing the inlet gas at a higher pressure, the sample may be dispensed quicker, which may increase the overall sampling rate.

In further embodiments, the gas supply may be configured to provide an inlet gas (to the gas inlet) at a pressure of at most 1000 bar, such as at most 800 bar, especially at most 500 bar, such as at most 350 bar, especially at most 250 bar.

In embodiments, the system may comprise or be functionally coupled to a solvent supply. Especially, the solvent supply may be functionally coupled, especially fluidically coupled, to the solvent inlet. Hence, during the first operational mode, the solvent compartment may be in fluid contact with the solvent supply via the solvent inlet, especially such that a solvent portion is provided to the solvent compartment from the solvent supply (via the solvent inlet).

In further embodiments the system may comprise a solvent supply pressurizer. The solvent supply pressurizer may especially be configured to pressurize the solvent supply during the first operational mode. Pressurizing the solvent supply during the first operational mode may facilitate providing the solvent portion to the solvent compartment during the first operational mode. In particular, pressurizing the solvent supply may accelerate providing the solvent portion to the solvent compartment during the first operational mode, which may allow for faster sampling, which may facilitate a higher sampling frequency. In further embodiments, the solvent supply pressurizer may be configured to provide a pressure to a solvent in the solvent supply at least exceeding an ambient pressure, especially exceeding atmospheric pressure, more especially a pressure of at least 1.1 atm, such as at least 2 bar, especially at least 3 bar, such as at least 5 bar, especially at least 10 bar. In particular, by providing a higher pressure in the solvent supply, the solvent compartment may be filled with the solvent portion more quickly, which may increase the overall sampling rate. In further embodiments, the solvent supply pressurizer may be configured to provide a pressure to the solvent in the solvent supply of at most 350 bar, such as at most 250 bar, especially at most 100 bar, such as at most 80 bar, especially at most 50 bar, such as at most 20 bar. In embodiments, the solvent supply pressurizer may be configured to provide a pressure to the solvent in the solvent supply selected from the range of 5-50 bar, especially from the range of 10-20 bar.

In further embodiments, the solvent supply pressurizer may be configured to pressurize the solvent supply during the second operational mode. Pressurizing the solvent supply during the first operational mode may provide the benefit that the solvent supply may already be pressurized upon switching to the first operational mode, which may increase the initial rate of providing the solvent portion to the solvent compartment, and may thereby facilitate increasing the overall achievable sampling rate.

In further embodiments, the solvent supply pressurizer may be functionally coupled to the gas supply, wherein the gas supply is configured to provide an inlet gas to the solvent supply pressurizer to pressurize the solvent in the solvent supply.

The sample obtained from the reactor may be dispensed from the system, especially from the sampling arrangement. In particular, the system may comprise or be functionally coupled to a dispenser valve (or: "selector valve"). The dispenser valve may especially be functionally coupled to the outlet. In embodiments, the dispenser valve may be configured to dispense a fluid, especially comprising the solvent portion and the sample, to one or more outlet containers (or: "sampling containers"). In particular, the dispenser valve may be functionally coupled to one or more outlet containers, and depending on the position of the dispenser valve, the dispenser valve may be configured to dispense a fluid to an outlet container of the one or more outlet containers.

In particular, the dispenser valve may be configured in a dispensing position relative to an outlet container in order to dispense to the outlet container during the second operational mode. In embodiments, the dispenser valve may be configured to move into a desired (next) dispensing position during the first operational mode, thereby eliminating time loss for moving into position during the second operational mode.

In further embodiments, the control system may be configured to control the dispenser valve.

In further embodiments, the system may comprise or be functionally coupled to a moveable sample dispenser, especially an XY sample dispenser. An moveable sample dispenser, such as an XY sample dispenser, may facilitate providing a larger number of collected samples.

In further embodiments, the XY sample dispenser may comprise an XY robot, especially an XY robot configured to move over a grid with sample containers to dispense a sample at a desired position. The XY robot may, in embodiments, be programmable. In embodiments, the XY sample dispenser may be configured to dispense a fluid, especially comprising the solvent portion and the sample, to one or more outlet containers. In particular, the XY sample dispenser may be moveable with respect to one or more outlet containers, and depending on the position of the XY sample dispenser, the dispenser valve may be configured to dispense a fluid to an outlet container of the one or more outlet containers.

The term "XY sample dispenser" may herein especially refer to a dispenser configured to move in an (XY) plane, especially according to a grid, or especially according to a carousel. In particular, the grid may comprise one or more outlet containers, and the XY sample dispenser may be moved in the (XY) plane in order to dispense into a (specific) outlet container of the one or more outlet containers. Such a configuration may be particularly flexible, and may be readily extended to a large number of outlet containers, which may be particularly desirable with fast sampling and/or with sampling from a plurality of reactions.

Thereby, the XY sample dispenser can be selectively positioned above a specific outlet container of a plurality of outlet containers, and to dispense into the specific outlet container.

In embodiments, the XY sample dispenser may comprise an XYZ sample dispenser, i.e., the XY sample dispenser may be configured moveable in a direction perpendicular to the (XY) plane. In particular, the XY sample dispenser may be positioned at different heights with respect to an outlet container.

In further embodiments, the control system may be configured to control the moveable sample dispenser, such as the XY sample dispenser, especially the XY robot.

In embodiments, the system may comprise one or more outlet containers, especially two or more outlet containers. The outlet containers may especially be arranged on a support structure. In embodiments, the support structure may comprise a grid or a carrousel for hosting the outlet containers, especially a grid, or especially a carousel. In further embodiments, the support structure, especially the one or more outlet containers, may be configured moveable relative to the outlet, especially to the dispenser valve, or especially to the XY sample dispenser. The moving of the support structure, especially of the one or more outlet containers, may also facilitate selecting a (specific) outlet container to dispense a sample into.

Hence, in further embodiments, both the dispenser valve (or the XY sample dispenser) and the support structure, especially the outlet containers, may be moveable relative to one another. This may facilitate further increasing the sampling rate of the system, and may enable operating with a larger number of outlet containers. In specific embodiments, the support structure may comprise a carousel, and the system may comprise a moveable sample dispenser, wherein outlet containers are arranged according to a plurality of concentric circles, wherein the carousel is configured to rotate, and wherein the moveable sample dispenser is configured to move along a straight line (parallel to a top surface of the carousel) passing through the center of the carousel.

In further embodiments, the control system may be configured to control the support structure.

The system may enable faster sampling than required for the monitoring of a reaction in the reactor. Hence, in embodiments, the system, especially the sampling arrangement, may be configured for sampling from a plurality of reactors, which may further increase the flexibility of the sampling arrangement, and may reduce the number of sampling arrangements required for monitoring several reactors, which may effectively lead to an overall reduction in materials and/or costs. In further embodiments, the plurality of reactors may be functionally coupled to a reactor selector valve, and the sampling compartment may be functionally coupled to the reactor selector valve, especially wherein the reactor selector valve has a plurality of reactor valve positions, wherein different reactor valve positions are functionally coupled to different reactors of the plurality of reactors. Hence, the sampling arrangement may be functionally coupled to a reactor of the plurality of reactors via the reactor selector valve, especially wherein the sampling arrangement is successively functionally coupled to different reactors of the plurality of reactors via the reactor selector valve.

In further embodiments, the control system may be configured to control the reactor selector valve. In further embodiments, the control system may be configured to generate a reactor stamp upon dispensing the sample, thereby recording the reactor of the plurality of reactors from which the sample originated.

In further embodiments, the control system may be configured to generate a time stamp upon dispensing the sample (from the outlet, especially from the dispenser), thereby recording the actual time of sampling rather than a desired or planned time. Deviations between the actual sampling time and a desired sampling time may, for example, occur when a high sampling rate is desired and conditions in the reactor (unexpectedly) change and delay the filling of the sampling compartment. For example, the pressure in the reactor could decrease and/or the viscosity of the reactor contents could increase, thereby decreasing the sampling rate. Alternatively, based on a (sensor) signal a washing/rinsing operation may be needed/beneficial, which may delay the sampling. Further, a software and/or hardware issue could delay sampling. Hence, it may be beneficial to (consistently) record the actual time of sampling.During the first operational mode, the sampling compartment may be filled with a sample from the reactor. If the reactor is operated at a pressure above the pressure in the sampling compartment at the start of the first operational mode, the sampling compartment may be filled due to the pressure difference. Hence, in embodiments, the sampling arrangement may be configured for sampling from a reactor, wherein during operation the reactor is operated at a pressure above atmospheric pressure, especially a pressure of at least 1.5 bar, such as at least 2 bar, especially at least 3 bar, such as at least 5 bar. Pressure-based sampling may be beneficial as the system may operate independent of a pump, which may otherwise be costly (especially because of moving pump parts). Hence, in further embodiments, the system, especially the sampling arrangement, may be a pump-free system.

However, in certain conditions a pump may also be beneficial, especially with regards to a reactor operated at or under atmospheric pressure, or in conditions wherein a higher sampling rate is desired.

Hence, in embodiments, the system may further comprise a pump. In such embodiments, in the first operational mode the one or more multiple-position valves may be configured to provide a fluid contact between the pump, the sampling compartment and the reactor.

In further embodiments, the pump may comprise a vacuum pump configured to provide a vacuum during the first operational mode to draw a sample from the reactor into the sampling compartment. The use of a vacuum pump to sample may inherently provide the benefit that no contamination may enter the reactor that is being sampled from. The vacuum pump may further be beneficial in that a "dead volume" with respect to sampling may be small.

In further embodiments, in the first operational mode the one or more multiple-position valves may provide a sampling pump flow path from the reactor via the sampling compartment back to the reactor, wherein the (circulation) pump is configured to control a sampling pump flow through (or: "along") the sampling flow path. In such embodiment, the (circular) sampling pump flow path may provide the benefit that other systems, such as analytical equipment, may be conveniently functionally coupled to the sampling arrangement, especially at the sampling pump flow path, such as in a daisy chain.

In such a daisy chain, the fluid in the sampling pump flow path may spend some time outside of the (heated/cooled) reactor, which can lead to changes in temperature.

Hence, in embodiments, an insulation material may be arranged along (at least part of) the sampling pump flow path.

In further embodiments, a temperature control element may be arranged along (at least part of) the sampling pump flow path, wherein the temperature control element is configured to control the temperature of (a fluid in) the sampling pump flow, especially within a temperature range around the reactor temperature T_{R}, such as from the range of T_{R}-10° - T_{R}+10°.

In further embodiments, the control system may be configured to control the pump. In further embodiments, the control system may be configured to control a sampling flow from the reactor to the sampling compartment, especially by controlling the pump. In further embodiments, the control system may be configured to control a sampling pump flow from the reactor via the sampling compartment to the reactor, especially by controlling the pump.

In further embodiments, the control system may be configured to control a solvent loop flow from the solvent supply to the solvent loop.

In further embodiments, the control system may be configured to control an outlet flow from the gas supply via the solvent compartment and the sampling compartment to the outlet.

In embodiments, the control system may further be configured to control one or more of a gas pressure of inlet gas, a solvent supply pressure, a solvent compartment pressure, a sampling compartment pressure, and a reactor pressure.

Samples withdrawn from the reactor ideally remain representative of the reaction mixture at the time of acquisition (from the reactor). Hence, in embodiments, the sampling arrangement may be configured to quench (the reaction in) the sample with a quenching agent (also see below) or by imposing a temperature and/or pressure suitable to quench the (reaction in the) sample. In embodiments, the system may comprise a temperature control system configured to control the temperature of the system, especially of one or more of (i) the one or more multi-position valves, (ii) the sampling compartment, (iii) the outlet, (iv) the sampling flow path, (v) the solvent flow path, (vi) the outlet flow path, (vii) the dispenser, and (viii) the outlet container. In embodiments, the temperature control system may be configured to quench the (reaction in the) sample. In further embodiments, the temperature control system may be configured to provide a temperature selected to accommodate sampling of viscous reaction mixtures and "solid samples", wherein "solid samples" refers to samples that may solidify at room temperature, but are liquid under the reactor conditions. In the absence of a temperature control system, such a "solid sample" may solidify in the sampling arrangement, which may generally be undesirable.

In further embodiments, the control system may be configured to control the temperature control system.

In further embodiments, the temperature control system may be configured to control the temperature control element.

In specific embodiments, the system may comprise a gas supply, a solvent supply, a solvent compartment, a sampling compartment, and an outlet, wherein the system is operable in a first operational mode and in a second operational mode, wherein in the first operational mode, the sampling compartment is in fluid contact with the reactor such that the sampling compartment is filled with a sample (from the reactor), and wherein the solvent compartment is in fluid contact with the solvent supply such that the solvent compartment is filled with a solvent portion (from the solvent supply); wherein in the second operational mode, the gas supply is in fluid contact with the solvent compartment, the sampling compartment and the outlet, wherein the gas supply is configured to provide an inlet gas at a pressure above an atmospheric pressure; and wherein the solvent compartment and the sampling compartment are configured such that: (i) in the first operational mode the solvent compartment and the sampling compartment are in fluid separation; and (ii) in the second operational mode the solvent compartment is arranged upstream (with respect to a gas flow from the gas inlet) from the sampling compartment, and the sampling compartment is arranged upstream from the outlet.

In a further aspect, the invention may provide a method for sampling from a reactor using the sampling arrangement according to the invention or the system according to the invention. Especially, the method may comprise consecutively executing the first operational mode and the second operational mode, especially successively and consecutively executing the first operational mode and the second operational mode. In embodiments, the method may comprise providing an inlet gas from the gas inlet during at least part of the second operational mode.

In embodiments, the method may comprise switching between (executing) the first operational mode and (executing) the second operational mode using the one or more multiple-position valves. Hence, the method may comprise switching the one or more multiple-position valves between a first configuration and a second configuration, wherein in the first configuration the one or more multiple-position valves provide the first operational mode, and wherein in the second configuration the one or more multiple-position valves provide the second operational mode.

In embodiments, the method may comprise providing a lower pressure in the sampling compartment than in the reactor during at least part of the first operational mode. Hence, the method may comprise filling the sampling compartment from the reactor based on a pressure difference.

In further embodiments, the method may comprise providing during at least part of the first operational mode a solvent at the solvent inlet with a solvent pressure exceeding the pressure in the solvent compartment. In particular, in embodiments wherein the solvent inlet is functionally coupled to a solvent supply, the method may comprise providing a lower pressure in the solvent compartment than in the solvent supply during at least part of the first operational mode. Hence, the method may comprise filling the solvent compartment (from the solvent inlet, especially from the solvent supply) based on a pressure difference.

During the second operational mode, the inlet gas provided from the gas inlet may drive the solvent portion and the sample to the outlet, especially through the outlet. Therefore, in embodiments, the inlet gas may be provided at a pressure suitable to drive the solvent portion and the sample to the outlet. In particular, the method may comprise providing the inlet gas at a pressure exceeding ambient pressure, especially a pressure exceeding atmospheric pressure, more especially a pressure of at least 1.1 atm, such as at least 2 bar, especially at least 3 bar such as at least 5 bar. In particular, by providing the inlet gas at a higher pressure, the sample may be dispensed quicker, which may increase the overall sampling rate.

In further embodiments, the method may comprise providing the inlet gas at a pressure of at most 1000 bar, such as at most 800 bar, especially at most 500 bar, such as at most 350 bar, especially at most 250 bar.

The inlet gas may come in direct contact with the sample. Hence, it may be beneficial for the inlet gas to be inert with respect to the sample or, alternatively, to interact with the sample in a desired manner.

Hence, in embodiments, the inlet gas may be an inert gas, especially an inert gas selected from the group comprising CO₂, SF₆, He, Ne, Kr, Xe, N₂ and Ar, more especially an inert gas selected from the group comprising N₂ and Ar, especially Ar. Ar may be beneficial in view of its high density as it may effectively blanket the sample. In particular, the inert gas is inert with respect to the (compounds in the) reaction mixture, especially (potentially) in the sample.

In further embodiments, the inlet gas may be selected to quench the sample, *i.e.,* to "freeze" the current composition of the sample with respect to the reaction(s) performed in the reactor. Hence, in further embodiments, the inlet gas may comprise a quenching agent. The term "quenching agent" may herein especially refer to a compound suitable to quench the sample.

Similarly, in embodiments, the solvent (comprised by the solvent portion) may be selected to quench the sample. Hence, in further embodiments, the solvent, especially the solvent portion, may comprise a quenching agent.

In further embodiments, the reaction may be quenched due to a pressure difference. In particular, the reaction may require a specific pressure regime, and the gas inlet may be configured to provide the inlet gas at a pressure outside of the pressure regime.

In particular, the term "quench" may herein refer to (essentially) instantaneously stop the reaction of interest, such that the reaction mixture is (essentially) stable over time and can be analyzed accurately (and repeatedly if required). The person skilled in the art will be capable of selecting a gaseous quenching agent and/or liquid quenching agent and/or quenching conditions for the reaction of interest.

In specific embodiments, the method may comprise consecutively executing the first operational mode and the second operational mode, wherein the method may comprise in the first operational mode (i) filling the sampling compartment with a sample (from the reactor); (ii) filling the solvent compartment with a solvent portion (from the solvent inlet); and wherein the method may comprise providing an inlet gas from the gas inlet during at least part of the second operational mode, especially thereby providing the solvent portion and the sample to the outlet.

In a further aspect, the invention may provide a computer program product comprising instructions for execution on a computer wherein the instructions, when executed by the computer, cause the computer to carry out the method according to the invention. In embodiments, the computer may especially comprise the control system (comprised by the system of the invention).

In a further aspect, the invention may provide a use of the sampling arrangement according to the invention, especially as defined in any one of claims 1-3, to sample from a reactor, especially from a reactor under a controlled atmosphere.

The term "controlled atmosphere" may herein refer to conditions with (sufficiently) accurate control of one or more of temperature, stirring rate, pressure, internal atmosphere, etc.

The terms "upstream" and "downstream" herein relate to an arrangement of items or features relative to the propagation of gas from a gas supply, wherein relative to a first position within a gas flow from the gas supply, a second position in the gas flow closer to the gas supply is "upstream", and a third position within the gas flow further away from the gas supply is "downstream".

The system, especially the control system, may have an operational mode. The term "operational mode" may also be indicated as "controlling mode". The system, or apparatus, or device (see further also below) may execute an action in a "mode" or "operational mode" or "mode of operation". Likewise, in a method an action, stage, or step may be executed in a "mode" or "operation mode" or "mode of operation". This does not exclude that the system, or apparatus, or device may also be adapted for providing another operational mode, or a plurality of other operational modes. Likewise, this does not exclude that before executing the mode and/or after executing the mode one or more other modes may be executed. However, in embodiments a control system (see further also below) may be available, that is adapted to provide at least the operational mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

The term "controlling" and similar terms herein may especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system. The control system and the element may thus at least temporarily, or permanently, functionally be coupled. The element may comprise the control system. In embodiments, the control system and the element may not be physically coupled. Control can be done via wired and/or wireless control. The term "control system" may also refer to a plurality of different control systems, which especially are functionally coupled, and of which e.g. one control system may be a control system and one or more others may be slave control systems.

The embodiments described herein are not limited to a single aspect of the invention. For example, an embodiment describing the sampling arrangement with respect to the operational modes may, for example, further relate to the system and the method. Similarly, an embodiment of the method describing the solvent or the inlet gas may further relate to the (operation of) the sampling arrangement or the system. In particular, an embodiment of the method describing an operation of the sampling arrangement (or the system) may indicate that the sampling arrangement (or the system) may, in embodiments, be configured for and/or be suitable for the operation.

### BRIEF DESCRIPTION OF THE DRAWINGS

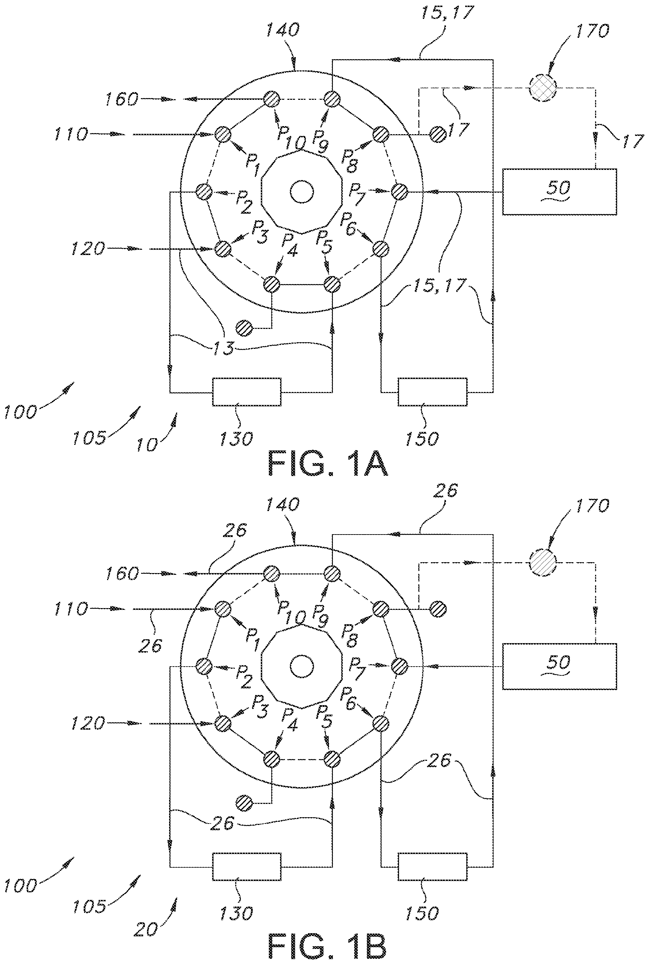

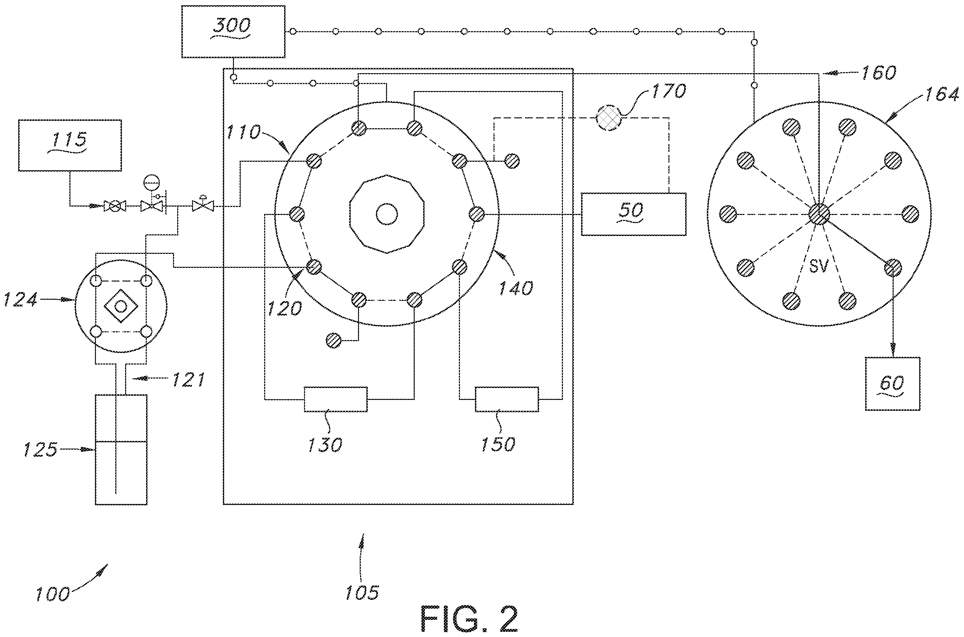

Embodiments of the invention will now be described, by way of example only, with reference to the accompanying schematic drawings in which corresponding reference symbols indicate corresponding parts, and in which: Fig. 1A-B schematically depict an embodiment of the sampling arrangement (105). Fig. 2 schematically depicts an embodiment of the system (100). The schematic drawings are not necessarily on scale.

### DETAILED DESCRIPTION OF THE EMBODIMENTS

Fig. 1A-B schematically depict an embodiment of a sampling arrangement 105 for sampling from a reactor 50. The sampling arrangement 105 comprises a solvent compartment 130, one or more multiple-position valves 140, and a sampling compartment 150. The sampling arrangement may be configured operable in a first operational mode 10 and a second operational mode 20. In the depicted embodiments, the one or more multiple-position valves 140 comprises a 10-position valve, especially a 10-position two-way valve. The one or more multiple-position valves 140, especially the 10-position valve, are operable in a first configuration and in a second configuration, wherein the sampling arrangement 105 is in the first operational mode 10 when the one or more multiple-position valves 140 are in the first configuration, and wherein the sampling arrangement 105 is in the second operational mode 20 when the one or more multiple-position valves 140 are in the second configuration. The solid lines in Fig. 1A indicate fluid contacts between (adjacent) positions of the 10-position valve in the first configuration, and the solid lines in Fig. 1B indicate the fluid contacts between (adjacent) positions of the 10-position valve in the second configuration (Fig. 1B).

Fig. 1A depicts an embodiment of the sampling arrangement 105 in the first operational mode 10. In the first operational mode 10 the one or more multiple-position valves 140 are configured to provide: a fluid contact between a solvent inlet 120 and the solvent compartment 130; a fluid contact between the reactor 50 and the sampling compartment 150; and fluid separation between the solvent compartment 130 and the sampling compartment 150. In particular, in further embodiments, in the first operational mode 10 the one or more multiple position valves 140 may be configured to provide a solvent flow path 13 from the solvent inlet 120 to the solvent compartment 130. In further embodiments, in the first operational mode 10 the one or more multiple position valves 140 may be configured to provide a sampling flow path 15 from the reactor 50 to the sampling compartment 150.

In embodiments, the sampling arrangement 105 may further comprise or be functionally coupled to a pump 170, especially wherein in the first operational mode 10 the one or more multiple-position valves 140 are configured to provide a fluid contact between the pump 170, the sampling compartment 150 and the reactor 50. In further embodiments, in the first operational mode the one or more multiple-position valves 140 may provide a sampling pump flow path 17 from the reactor 50 via the sampling compartment 150 back to the reactor 50, especially wherein the pump 170 is configured to control a sampling flow through the sampling pump flow path 17. The sampling pump flow path 17 may especially comprise the sampling flow path 15.

Fig. 1B depicts an embodiment of the sampling arrangement 105 in the second operational mode 20. In the second operational mode 20 the one or more multiple-position valves 140 are configured to provide: fluid contact between (successively) a gas inlet 110, the solvent compartment 130, the sampling compartment 150, and an outlet 160.

In further embodiments, in the second operational mode 20 the one or more multiple-position valves 140 are configured to provide fluid separation between the solvent inlet 120 and the solvent compartment 130. In further embodiments, in the second operational mode 20 the one or more multiple-position valves 140 are configured to provide fluid separation between the sampling compartment 150 and the reactor 50.

In the depicted embodiment, the sampling arrangement 105 comprises a 10-position valve, wherein the 10-position valves comprises 10 positions (P₁-P₁₀), wherein: a first position P₁ indicates a gas inlet position; a second position P₂ indicates a solvent compartment inlet; a third position P₃ indicates a solvent inlet position; a fourth position P₄ indicates a solvent stop; a fifth position P₅ indicates a solvent outlet position; a sixth position P₆ indicates a sampling compartment inlet; a seventh position P₇ indicates a reactor inlet position; an eighth position P₈ indicates a sampling stop; a ninth position P₉ indicates a sampling compartment outlet; and a tenth position P₁₀ indicates an outlet position. Especially, in the first operational mode 10: P₁₀ may be in fluid contact with P₁; P₂ may be in fluid contact with P₃; P₄ may be in fluid contact with P₅; P₆ may be in fluid contact with P₇; and P8 may be in fluid contact with P₉, and in the second operational mode 20: P₁ may be in fluid contact with P₂; P₃ may be in fluid contact with P₄; P₅ may be in fluid contact with P₆; P₇ may be in fluid contact with P₈; and P₉ may be in fluid contact with P₁₀.

In further embodiments, the first position P₁ is functionally coupled to the gas inlet 110, the third position P₃ is functionally coupled to the solvent inlet 120, the seventh position P₇ is functionally coupled to the reactor 50, and the tenth position P₁₀ is functionally coupled to the outlet. In further embodiments, the fourth position P₄ may be functionally coupled to a blinding nut. Similarly, in further embodiments, the eighth position P₈ may be functionally coupled to a blinding nut.

In further embodiments, the sampling compartment 150 may have a sampling volume V₁₅₀ selected from the range of 50 µl - 5 ml and the solvent compartment 130 may have a solvent volume V₁₃₀ ≥ 2V₁₅₀. The sampling volume may herein specifically refer to the total volume in between the respective connected positions (P_{6,} P₉) of the multi-position valve, i.e.. it may refer to the volume of the sampling compartment 150 as well as the volume of any connected tubing. Essentially, however, the volume of the sampling compartment 150 primarily dictates the sampling volume. Further, it will be clear to the person skilled in the art that in many applications the exact available sampling volume may not directly dictate the volume of the sample. For example, a 50 µl loop used with sampling from a pressurized autoclave may not give exactly 50 µl of liquid. For example, prior to sampling the loop may be filled (with a gas) at a pressure of 1 atm, which may be compressed by an incoming liquid at an operating pressure (i.e., approx. to 1/50th of the volume at an operating pressure of 50 atm). It will further be clear to the person skilled in the art that a deviation in the exact sampling volume can be addressed in downstream analyses, particularly when an internal standard is used.

In the depicted embodiment, the sampling compartment 150 is (configured to be) arranged external to the reactor 50 during operation of the sampling arrangement 150. However, in further embodiments, the sampling compartment 150 may be (configured to be) arranged inside of the reactor 50 during operation of the sampling arrangement 150.

Fig. 2 schematically depicts an embodiment of the system 100 comprising the sampling arrangement 105. In the depicted embodiment, the system 100 further comprises a control system 300, wherein the control system 300 is configured to control the one or more multiple-position valves 140. In further embodiments, the control system may be configured to in a first mode of operation consecutively execute the first operational mode 10 and the second operational mode 20.

In the depicted embodiment, the system comprises or is functionally coupled to a gas supply 115, wherein the gas supply 115 is functionally coupled to the gas inlet 110.

In the depicted embodiment, the system 100 comprises or is functionally coupled to a solvent supply 125, wherein the solvent supply 125 is functionally coupled to the solvent inlet 120. Further, the system 100 comprises a solvent supply pressurizer 121 configured to pressurize the solvent supply 125 during the first operational mode 10. In the depicted embodiment, the solvent supply pressurizer 121 is functionally coupled to the gas supply 115, especially via a solvent supply valve 124. Especially, the gas supply 115 may be configured to provide a gas, especially the inlet gas, to pressurize the solvent in the solvent supply 125. In further embodiments, the solvent supply pressurizer 121 may (alternatively) be functionally coupled to a second gas supply.

The system 100, in the depicted embodiment, further comprises or is functionally coupled to a dispenser valve 164, wherein the dispenser valve 164 is functionally coupled to the outlet 160. The dispenser valve 164 may be configured to dispense fluid, especially the solvent portion and the sample, to an outlet container 60. In particular, the dispenser valve 164 may be configured to dispense successive samples (with corresponding solvent portions) to different outlet containers 60. In further embodiments, the control system 300 may be configured to control the dispenser valve 164.

In embodiments, the outlet container 60 may be a chromatography vial, especially a chromatography vial suitable for subsequent analysis, such as for GC or HPLC analysis.

In embodiments, the outlet container 60 may comprise a quenching agent configured to quench the sample upon being dispensed to the outlet container 60.

In further embodiments, the system 100 may further comprise a pump 170, especially wherein in the first operational mode 10 the one or more multiple-position valves 140 are configured to provide a fluid contact between the pump 170, the sampling compartment 150 and the reactor 50. In further embodiments, in the first operational mode the one or more multiple-position valves 140 provide a sampling pump flow path 17 from the reactor 50 via the sampling compartment 150 back to the reactor 50, especially wherein the pump 170 is configured to control a sampling flow through the sampling pump flow path 17.

In such embodiments, the method may in the first operational mode 10 comprise providing a sampling pump flow, especially along a sampling pump flow path 17, from the reactor 50 via the sampling compartment 150 to the reactor 50.

The system 100 may be configured to drive fluid based on pressure differences, *i.e.,* the system may be configured for one or more of (i) filling the sampling compartment 150 with a sample from the reactor 50 based on a pressure difference, (ii) filling the solvent compartment 130 with a solvent portion from the solvent inlet 120, especially the solvent supply 125, based on a pressure difference, and (iii) driving the solvent portion and the sample to the outlet 160 by providing a (pressurized) inlet gas from the gas inlet 110. Hence, in further embodiments, the control system 300 may be configured to control one or more of a gas pressure of inlet gas, a solvent supply pressure, a solvent compartment pressure, a sampling compartment pressure, and a reactor pressure.

Fig. 1A-B and Fig. 2 further schematically depict embodiments of the method for sampling from a reactor 50. The method may comprise consecutively executing the first operational mode 10 and the second operational mode 20. The method may further comprise providing an inlet gas from the gas inlet 110, especially from the gas supply 115, during at least part of the second operational mode 20.

In further embodiments, the method may comprise providing one or more flow paths. In further embodiments, in the first operational mode 10 the method may comprise providing a solvent flow, especially along a solvent flow path 13, from the solvent inlet 120, especially from the solvent supply 125, to the solvent compartment 130. In further embodiments, in the first operational mode 10 the method may comprise providing a sampling flow, especially along a sampling flow path 15, from the reactor 50 to the sampling compartment 150.

In further embodiments, the method may comprise providing a lower pressure in the sampling compartment 150 than in the reactor 50 during at least part of the first operational mode 10, especially such that the sampling compartment 150 is filled with a sample from the reactor 50. In further embodiments, the method may comprise providing during at least part of the first operational mode 10 a solvent at the solvent inlet 120, especially from the solvent supply 125, with a solvent pressure exceeding the pressure in the solvent compartment 130, especially such that the solvent compartment 130 is filled with a solvent portion from the solvent inlet 120, especially from the solvent supply 125.

In further embodiments, in the second operational mode 20 the method may comprise providing an outlet flow, especially along an outlet flow path 26, from the gas inlet 110, especially from the gas supply 115, via the solvent compartment 130 and the sampling compartment 150 to the outlet 160. In further embodiments, the method may comprise (during the second operational mode 20) providing the inlet gas at a pressure suitable to drive the solvent portion and the sample to the outlet 160, especially providing the inlet gas at a pressure above atmospheric pressure.

In embodiments, the method may comprise switching between the first operational mode 10 and the second operational mode 20 using the one or more multiple-position valves, especially using the 10-position valve.

Fig. 1A-B and Fig. 2 further depict a use of the sampling arrangement 105 according to sample from a reactor 50, wherein the reactor 50 is especially (operated) under a controlled atmosphere.

The term "plurality" refers to two or more. Furthermore, the terms "a plurality of" and "a number of" may be used interchangeably.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%. Moreover, the terms "about" and "approximately" may also relate to 90% or higher, such as 95% or higher, especially 99% or higher, even more especially 99.5% or higher, including 100%. For numerical values it is to be understood that the terms "substantially", "essentially", "about", and "approximately" may also relate to the range of 90% - 110%, such as 95%-105%, especially 99%-101% of the values(s) it refers to.

The term "comprise" includes also embodiments wherein the term "comprises" means "consists of'.

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

The term "further embodiment" and similar terms may refer to an embodiment comprising the features of the previously discussed embodiment, but may also refer to an alternative embodiment.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", "include", "including", "contain", "containing" and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings. Moreover, if a method or an embodiment of the method is described being executed in a device, apparatus, or system, it will be understood that the device, apparatus, or system is suitable for or configured for (executing) the method or the embodiment of the method respectively.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A sampling arrangement (105) for sampling from a reactor (50), the sampling arrangement (105) comprising a gas inlet (110), a solvent inlet (120), a solvent compartment (130), one or more multiple-position valves (140), a sampling compartment (150), and an outlet, wherein in a first operational mode (10) the one or more multiple-position valves (140) are configured to provide:
fluid contact between the solvent inlet (120) and the solvent compartment (130);
fluid contact between the reactor (50) and the sampling compartment (150); and
fluid separation between the solvent compartment (130) and the sampling compartment (150);
the sampling arrangement **characterized in that** in a second operational mode (20) the one or more multiple-position valves (140) are configured to provide:
fluid contact between the gas inlet (110), the solvent compartment (130), the sampling compartment (150), and the outlet (160).

2. The sampling arrangement (105) according to claim 1, wherein the one or more multiple-position valves (140) comprises a 10-position valve, wherein the 10-position valve is configurable in a first configuration and in a second configuration, wherein the sampling arrangement (105) is in the first operational mode (10) when the 10-position valve is in the first configuration, and wherein the sampling arrangement (105) is in the second operational mode (20) when the 10-position valve is in the second configuration.

3. The sampling arrangement (105) according to any one of the preceding claims, wherein the sampling compartment (150) has a sampling volume V₁₅₀ selected from the range of 50 µl - 5 ml, and wherein the solvent compartment (130) has a solvent volume V₁₃₀, wherein V₁₃₀ ≥ 2*V₁₅₀.

4. The sampling arrangement (105) according to any one of the preceding claims, wherein during operation of the sampling arrangement (105) the sampling compartment (150) is arranged external to the reactor (50).

5. A system (100) comprising the sampling arrangement (105) according to any one of the preceding claims, wherein the system (100) comprises a control system (300), wherein the control system (300) is configured to control the one or more multiple-position valves (140), and wherein the control system (300) is configured to in a first mode of operation consecutively execute the first operational mode (10) and the second operational mode (20).

6. The system (100) according to claim 5, wherein the system (100) comprises or is functionally coupled to a solvent supply (125), wherein the solvent supply (125) is fluidically coupled to the solvent inlet (120), wherein the system (100) comprises a solvent supply pressurizer (121) configured to pressurize the solvent supply (125) during the first operational mode (10).

7. The system (100) according to any one of the preceding claims 5-6, wherein the system (100) comprises or is functionally coupled to a dispenser valve (164), wherein the outlet (160) is functionally coupled to the dispenser valve (164), and wherein the dispenser valve (164) is configured to dispense fluid to one or more outlet containers (60).

8. The system (100) according to any one of the preceding claims 5-7, wherein the system (100) further comprises a pump (170), wherein in the first operational mode (10) the one or more multiple-position valves (140) are configured to provide a fluid contact between the pump (170), the sampling compartment (150) and the reactor (50).

9. The system (100) according to claim 8, wherein in the first operational mode the one or more multiple-position valves (140) provide a sampling pump flow path (17) from the reactor (50) via the sampling compartment (150) back to the reactor (50), wherein the pump (170) is configured to control a sampling pump flow through the sampling pump flow path (17).

10. The system (100) according to any one of the preceding claims 5-9, wherein the control system (300) is configured to control one or more of a gas pressure of inlet gas, a solvent supply pressure, a solvent compartment pressure, a sampling compartment pressure, and a reactor pressure.

11. A method for sampling from a reactor (50) using the sampling arrangement (105) according to any one of the preceding claims 1-4 or the system (100) according to any one of the preceding claims 5-10, the method comprising consecutively executing the first operational mode (10) and the second operational mode (20), wherein the method further comprises providing an inlet gas from the gas inlet (110) during at least part of the second operational mode (20).

12. The method according to claim 11, wherein the method comprises switching between the first operational mode (10) and the second operational mode (20) using the one or more multiple-position valves (140).

13. The method according to any one of the preceding claims 11-12, the method comprising:
providing a lower pressure in the sampling compartment (150) than in the reactor (50) during at least part of the first operational mode (10); and/or
providing during at least part of the first operational mode (10) a solvent at the solvent inlet (120) with a solvent pressure exceeding the pressure in the solvent compartment (130).

14. The method according to any one of the preceding claims 11-13, wherein the method comprises providing the inlet gas at a pressure above atmospheric pressure, and wherein the inlet gas is an inert gas.

15. Use of the sampling arrangement according to any one of claims 1-4 to sample from a reactor.

16. Use according to claim 15, wherein the reactor is under a controlled atmosphere.

## Patentansprüche

1. Probenahmeanordnung (105) zur Probenahme aus einem Reaktor (50), wobei die Probenahmeanordnung (105) einen Gaseinlass (110), einen Lösungsmitteleinlass (120), eine Lösungsmittelkammer (130), ein oder mehrere Mehrpositionsventile (140), eine Probenahmekammer (150) und einen Auslass umfasst, wobei in einem ersten Betriebsmodus (10) das eine oder die mehreren Mehrpositionsventile (140) dazu ausgelegt sind, Folgendes bereitzustellen:
Fluidkontakt zwischen dem Lösungsmitteleinlass (120) und der Lösungsmittelkammer (130);
Fluidkontakt zwischen dem Reaktor (50) und der Probenahmekammer (150);
Fluidtrennung zwischen der Lösungsmittelkammer (130) und der Probenahmekammer (150);
wobei die Probenahmeanordnung **dadurch gekennzeichnet ist, dass** in einem zweiten Betriebsmodus (20) das eine oder die mehreren Mehrpositionsventile (140) dazu ausgelegt sind, Folgendes bereitzustellen:
Fluidkontakt zwischen dem Gaseinlass (110), der Lösungsmittelkammer (130), der Probenahmekammer (150) und dem Auslass (160).

2. Probenahmeanordnung (105) nach Anspruch 1, wobei das eine oder die mehreren Mehrpositionsventile (140) ein 10-Positionen-Ventil umfassen, wobei das 10-Positionen-Ventil in einer ersten Konfiguration und in einer zweiten Konfiguration konfigurierbar ist, wobei sich die Probenahmeanordnung (105) im ersten Betriebsmodus (10) befindet, wenn sich das 10-Positionen-Ventil in der ersten Konfiguration befindet, und wobei sich die Probenahmeanordnung (105) im zweiten Betriebsmodus (20) befindet, wenn sich das 10-Positionen-Ventil in der zweiten Konfiguration befindet.

3. Probenahmeanordnung (105) nach einem der vorhergehenden Ansprüche, wobei die Probenahmekammer (150) ein Probenahmevolumen V₁₅₀ aufweist, das aus dem Bereich von 50 µl - 5 ml ausgewählt ist, und wobei die Lösungsmittelkammer (130) ein Lösungsmittelvolumen V₁₃₀ aufweist, wobei V₁₃₀ ≥ 2*V₁₅₀.

4. Probenahmeanordnung (105) nach einem der vorhergehenden Ansprüche, wobei während des Betriebs der Probenahmeanordnung (105) die Probenahmekammer (150) außerhalb des Reaktors (50) angeordnet ist.

5. System (100), umfassend die Probenahmeanordnung (105) nach einem der vorhergehenden Ansprüche, wobei das System (100) ein Steuerungssystem (300) umfasst, wobei das Steuerungssystem (300) dazu ausgelegt ist, das eine oder die mehreren Mehrpositionsventile (140) zu steuern, und wobei das Steuerungssystem (300) dazu ausgelegt ist, in einer ersten Betriebsart aufeinanderfolgend den ersten Betriebsmodus (10) und den zweiten Betriebsmodus (20) auszuführen.

6. System (100) nach Anspruch 5, wobei das System (100) eine Lösungsmittelzufuhr (125) umfasst oder funktionell mit dieser gekoppelt ist, wobei die Lösungsmittelzufuhr (125) fluidisch mit dem Lösungsmitteleinlass (120) gekoppelt ist, wobei das System (100) einen Lösungsmittelzufuhrdruckerzeuger (121) umfasst, der dazu ausgelegt ist, die Lösungsmittelzufuhr (125) während des ersten Betriebsmodus (10) mit Druck zu beaufschlagen.

7. System (100) nach einem der vorhergehenden Ansprüche 5-6, wobei das System (100) ein Ausgabeventil (164) umfasst oder funktionell mit diesem gekoppelt ist, wobei der Auslass (160) funktionell mit dem Ausgabeventil (164) gekoppelt ist und wobei das Ausgabeventil (164) dazu ausgelegt ist, Fluid an einen oder mehrere Auslassbehälter (60) auszugeben.

8. System (100) nach einem der vorhergehenden Ansprüche 5-7, wobei das System (100) ferner eine Pumpe (170) umfasst, wobei im ersten Betriebsmodus (10) das eine oder die mehreren Mehrpositionsventile (140) dazu ausgelegt sind, einen Fluidkontakt zwischen der Pumpe (170), der Probenahmekammer (150) und dem Reaktor (50) bereitzustellen.

9. System (100) nach Anspruch 8, wobei im ersten Betriebsmodus das eine oder die mehreren Mehrpositionsventile (140) einen Probenahmepumpenflussweg (17) vom Reaktor (50) über die Probenahmekammer (150) zurück zum Reaktor (50) bereitstellen, wobei die Pumpe (170) dazu ausgelegt ist, einen Probenahmepumpenfluss durch den Probenahmepumpenflussweg (17) zu steuern.

10. System (100) nach einem der vorhergehenden Ansprüche 5-9, wobei das Steuerungssystem (300) dazu ausgelegt ist, eines oder mehr zu steuern von: einem Gasdruck des Einlassgases, einem Lösungsmittelzufuhrdruck, einem Lösungsmittelkammerdruck, einem Probenahmekammerdruck und einem Reaktordruck.

11. Verfahren zur Probenahme aus einem Reaktor (50) unter Verwendung der Probenahmeanordnung (105) nach einem der vorhergehenden Ansprüche 1-4 oder des Systems (100) nach einem der vorhergehenden Ansprüche 5-10, wobei das Verfahren das aufeinanderfolgende Ausführen des ersten Betriebsmodus (10) und des zweiten Betriebsmodus (20) umfasst, wobei das Verfahren ferner das Bereitstellen eines Einlassgases aus dem Gaseinlass (110) während mindestens eines Teils des zweiten Betriebsmodus (20) umfasst.

12. Verfahren nach Anspruch 11, wobei das Verfahren das Umschalten zwischen dem ersten Betriebsmodus (10) und dem zweiten Betriebsmodus (20) unter Verwendung des einen oder der mehreren Mehrpositionsventile (140) umfasst.

13. Verfahren nach einem der vorhergehenden Ansprüche 11-12, wobei das Verfahren umfasst:
Bereitstellen eines niedrigeren Drucks in der Probenahmekammer (150) als im Reaktor (50) während mindestens eines Teils des ersten Betriebsmodus (10); und/oder
Bereitstellen eines Lösungsmittels am Lösungsmitteleinlass (120) mit einem Lösungsmitteldruck, der den Druck in der Lösungsmittelkammer (130) übersteigt, während mindestens eines Teils des ersten Betriebsmodus (10).

14. Verfahren nach einem der vorhergehenden Ansprüche 11-13, wobei das Verfahren das Bereitstellen des Einlassgases bei einem Druck oberhalb des Atmosphärendrucks umfasst, und wobei das Einlassgas ein Inertgas ist.

15. Verwendung der Probenahmeanordnung nach einem der Ansprüche 1-4 zur Probenahme aus einem Reaktor.

16. Verwendung gemäß Anspruch 15, wobei der Reaktor unter einer kontrollierten Atmosphäre steht.

## Revendications

1. Agencement d'échantillonnage (105) permettant un échantillonnage à partir d'un réacteur (50), l'agencement d'échantillonnage (105) comprenant une entrée de gaz (110), une entrée de solvant (120), un compartiment de solvant (130), une ou plusieurs vannes à positions multiples (140), un compartiment d'échantillonnage (150) et une sortie, dans un premier mode de fonctionnement (10), la ou les vannes à positions multiples (140) étant conçues pour fournir :
un contact fluidique entre l'entrée de solvant (120) et le compartiment de solvant (130) ;
un contact fluidique entre le réacteur (50) et le compartiment d'échantillonnage (150) ; et
une séparation fluidique entre le compartiment de solvant (130) et le compartiment d'échantillonnage (150) ;
l'agencement d'échantillonnage étant **caractérisé en ce que**, dans un second mode de fonctionnement (20), la ou les vannes à positions multiples (140) étant conçues pour fournir :
un contact fluidique entre l'entrée de gaz (110), le compartiment de solvant (130), le compartiment d'échantillonnage (150) et la sortie (160).

2. Agencement d'échantillonnage (105) selon la revendication 1, la ou les vannes à positions multiples (140) comprenant une vanne à 10 positions, la vanne à 10 positions pouvant être configurée dans une première configuration et dans une seconde configuration, l'agencement d'échantillonnage (105) étant dans le premier mode de fonctionnement (10) lorsque la vanne à 10 positions est dans la première configuration, et l'agencement d'échantillonnage (105) étant dans le second mode de fonctionnement (20) lorsque la vanne à 10 positions est dans la seconde configuration.

3. Agencement d'échantillonnage (105) selon l'une quelconque des revendications précédentes, le compartiment d'échantillonnage (150) ayant un volume d'échantillonnage V₁₅₀ choisi dans la plage comprise entre 50 µ1 et 5 ml, et le compartiment de solvant (130) ayant un volume de solvant V₁₃₀, où V₁₃₀ ≥ 2*V₁₅₀.

4. Agencement d'échantillonnage (105) selon l'une quelconque des revendications précédentes, pendant le fonctionnement de l'agencement d'échantillonnage (105), le compartiment d'échantillonnage (150) étant disposé à l'extérieur du réacteur (50).

5. Système (100) comprenant l'agencement d'échantillonnage (105) selon l'une quelconque des revendications précédentes, le système (100) comprenant un système de commande (300), le système de commande (300) étant conçu pour commander la ou les vannes à positions multiples (140), et le système de commande (300) étant conçu pour, dans un premier mode opérationnel, exécuter consécutivement le premier mode de fonctionnement (10) et le second mode de fonctionnement (20).

6. Système (100) selon la revendication 5, le système (100) comprenant ou étant fonctionnellement accouplé à une alimentation en solvant (125), l'alimentation en solvant (125) étant fluidiquement accouplée à l'entrée de solvant (120), le système (100) comprenant un pressuriseur d'alimentation en solvant (121) conçu pour pressuriser l'alimentation en solvant (125) pendant le premier mode de fonctionnement (10).

7. Système (100) selon l'une quelconque des revendications précédentes 5 à 6, le système (100) comprenant ou étant accouplé fonctionnellement à une vanne de distribution (164), la sortie (160) étant accouplée fonctionnellement à la vanne de distribution (164), et la vanne de distribution (164) étant conçue pour distribuer le fluide à un ou plusieurs contenants de sortie (60).

8. Système (100) selon l'une quelconque des revendications précédentes 5 à 7, le système (100) comprenant en outre une pompe (170), dans le premier mode de fonctionnement (10), la ou les vannes à positions multiples (140) étant conçues pour fournir un contact fluidique entre la pompe (170), le compartiment d'échantillonnage (150) et le réacteur (50).

9. Système (100) selon la revendication 8, dans le premier mode de fonctionnement, la ou les vannes à positions multiples (140) fournissant un chemin d'écoulement de pompe d'échantillonnage (17) depuis le réacteur (50) par le biais du compartiment d'échantillonnage (150) de retour au réacteur (50), la pompe (170) étant conçue pour commander un écoulement de pompe d'échantillonnage à travers le chemin d'écoulement de pompe d'échantillonnage (17).

10. Système (100) selon l'une quelconque des revendications précédentes 5 à 9, le système de commande (300) étant conçu pour commander une ou plusieurs pressions parmi une pression de gaz d'entrée, une pression d'alimentation en solvant, une pression de compartiment de solvant, une pression de compartiment d'échantillonnage et une pression de réacteur.

11. Procédé d'échantillonnage d'un réacteur (50) utilisant l'agencement d'échantillonnage (105) selon l'une quelconque des revendications précédentes 1 à 4 ou le système (100) selon l'une quelconque des revendications précédentes 5 à 10, le procédé comprenant l'étape consistant à exécuter consécutivement le premier mode de fonctionnement (10) et le second mode de fonctionnement (20), le procédé comprenant en outre l'étape consistant à fournir un gaz d'entrée à partir de l'entrée de gaz (110) pendant au moins une partie du second mode de fonctionnement (20).

12. Procédé selon la revendication 11, le procédé comprenant l'étape consistant à commuter entre le premier mode de fonctionnement (10) et le second mode de fonctionnement (20) à l'aide de la ou des vannes à positions multiples (140).

13. Procédé selon l'une quelconque des revendications précédentes 11 à 12, le procédé comprenant les étapes consistant à :
fournir une pression plus faible dans le compartiment d'échantillonnage (150) que dans le réacteur (50) pendant au moins une partie du premier mode de fonctionnement (10) ; et/ou
fournir, pendant au moins une partie du premier mode de fonctionnement (10), un solvant au niveau de l'entrée de solvant (120), la pression de solvant étant supérieure à la pression dans le compartiment de solvant (130).

14. Procédé selon l'une quelconque des revendications précédentes 11 à 13, le procédé comprenant l'étape consistant à fournir le gaz d'entrée à une pression supérieure à la pression atmosphérique, et le gaz d'entrée étant un gaz inerte.

15. Utilisation de l'agencement d'échantillonnage selon l'une quelconque des revendications 1 à 4 pour échantillonner à partir d'un réacteur.

16. Utilisation selon la revendication 15, le réacteur étant sous atmosphère contrôlée.
